# EUROPEAN PATENT SPECIFICATION

(11) **EP 2 661 882 B1**
(45) Date of publication and mention of the grant of the patent: **24.06.2015**
(21) Application number: 11810684.8
(22) Date of filing: 21.12.2011
(51) Int. Cl.: H04N 19/30, H04N 19/115, H04N 19/186, H04N 19/17, H04N 19/23

(54) **VIDEO CODING AND DECODING DEVICES AND METHODS PRESERVING PPG RELEVANT INFORMATION**
VIDEOKODIERUNG UND -DEKODIERUNGSVORRICHTUNGEN SOWIE VERFAHREN ZUR BEWAHRUNG VON PPG-RELEVANTEN INFORMATIONEN
DISPOSITIFS ET PROCÉDÉS DE CODAGE ET DE DÉCODAGE VIDÉO PRÉSERVANT DES INFORMATIONS CONCERNANT PPG

(30) Priority: 05.01.2011 EP 11150149
(43) Date of publication of application: 13.11.2013
(73) Proprietor: Koninklijke Philips N.V., 5656 AE Eindhoven (NL)
(72) Inventor: KIRENKO, Ihor, Olehovych, NL-5656 AE Eindhoven (NL); DE HAAN, Gerard, NL-5656 AE Eindhoven (NL); VAN LEEST, Adriaan Johan, NL-5656 AE Eindhoven (NL); MULYAR, Pavlo, Serhiyovych, NL-5656 AE Eindhoven (NL)
(74) Representative: Coops, Peter
(86) International application number: PCT/IB2011/055847
(87) International publication number: WO 2012/093304

(56) References cited:
- EP-A1- 1 739 970
- US-A1- 2005 200 757
- US-A1- 2010 119 156
- PAUL VIOLA; MICHAEL JONES: "Robust Real-time Object Detection", 2ND INTERN. WORKSHOP ON STATISTICAL AND COMPUTATIONAL THEORIES OF VISION, 2001,
- WIM VERKRUYSSE; LARS O. SVAASAND; J. STUART NELSON: "Remote plethysmographic imaging using ambient light", OPTICS EXPRESS, vol. 16, no. 26, December 2008 (2008-12),

## Description

### FIELD OF THE INVENTION

The present invention relates to a video encoding device and a corresponding video encoding method for encoding video data, by which PPG (photo plethysmographic imaging) relevant information is preserved.

Further, the present invention relates to a video decoding device and a corresponding video decoding method for decoding encoded video data.

Still further, the present invention relates to a video coding system for encoding and decoding video data and to a computer program for implementing said methods.

### BACKGROUND OF THE INVENTION

There is an increasing demand to provide technological solutions for a robust continuous monitoring of biometrical signals of people. This demand is a result of growing awareness of the importance of a healthy and active lifestyle among the younger generations. Moreover, the constantly ageing population as a result of increased life expectancy puts extra pressure on the necessity of health monitoring systems with minimal interference to a person's daily life activity. Unobtrusive monitoring of biometrical signals could be used to provide a virtually immediate feedback on the body and mind condition at any time, and evaluate changes in the health status of people as soon as possible.

Conventional devices and methods of measuring biometrical signals (e.g. heart rate, respiratory rate, blood pressure, skin oxygenation, etc) require the user to wear annoying body sensors, which might be experienced as obtrusive to a normal human life activity. Therefore, attempts are seen in recent years to develop contactless techniques for remote monitoring of vital body signals. The latest developments show the implementation of unobtrusive remote monitoring by means of imaging sensors as designed for consumer (webcam) or broadcast video.

A method to measure skin color variations, called Photo-Plethysmographic imaging (PPG), is described in Wim Verkruysse, Lars O. Svaasand, and J. Stuart Nelson, "Remote plethysmographic imaging using ambient light", Optics Express, Vol. 16, No. 26, December 2008. It is based on the principle that temporal variations in blood volume in the skin lead to variations in light absorptions by the skin. Such variations can be registered by a video camera that takes images of a skin area, e.g. the face, while processing calculates the pixel average over a manually selected region (typically part of the cheek in this system). By looking at periodic variations of this average signal, the heart beat rate and respiratory rate can be extracted.

Known systems for remote measurement of heart beat or respiratory rate signals are based on analysis of uncompressed, un-processed video sequences directly after image sensing. In most "real-life" applications video sequences are stored or transmitted in a compressed form. The compression of video signals presumes a removal of some redundant (from visual perception point of view) information. Unfortunately, information, which is not important for visual perception might be crucial for detection of biometrical signals. For instance, the MPEG compression standard makes use of inter-frame predictions, which slightly changes the temporal information of a video signal. Those changes make the detection of temporal biometrical signals difficult or even impossible. However, for many applications, extraction of heart beat signal from a video should be implemented after the video recording took place. In those cases, compressed video would be processed.

The PPG relevant information can be preserved in a coded bit stream if a video is compressed at a high bit rate. However, compression of a video with a low compression ratio will increase the size of a storage file or increase the transmission bandwidth.

In EP 1 739 970 A1a method and an apparatus for encoding video data in a real-time face-to-face communication system are disclosed. A video data signal comprising frames of facial images is input. Parts of a frame of the video data signal are classified as key parts or non-key parts of a facial image to form a key group and a non-key group. Each group is divided into macro-blocks to form key macro-blocks and non-key macro-blocks. Each key macro-block is encoded with reference to at least one macro-block only in said frame to define encoded key data which is output. For each non-key macro-bock the amount of correlation between the non-key macro-block and at least one comparison macro-block in at least one preceding frame is determined. If the amount of correlation is below a threshold the non-key macro-block is encoded with reference to at least one macro-block only in said frame to define first encoded non-key data which is output. If the amount of correlation is above the threshold the non-key macro housing block is encoded with reference to its respective comparison macro-block to define a second encoded non-key data which is output.

In US 2010/0119156 Alan image processing apparatus is disclosed that includes a characteristic region detecting section, an image dividing section and a background region other than the characteristic region, and a compressing section. The characteristic region detecting section detects the characteristic region in a plurality of moving-image-component images included in a moving image, the image dividing section divides each of the plurality of moving-image-component images into the characteristic region and the background region, and the compressing section compresses a characteristic region moving image including a plurality of characteristic region images and a background region moving image including a plurality of background region images at different strengths from each other.

In US 2005/0200757 A1 a method and apparatus for reconstructing digital video are disclosed. In one embodiment, a method for transmitting an original video stream including at least one frame includes segmenting the frame into a plurality of regions, encoding each region in accordance with one of a plurality of available interpolation algorithms that provides minimal distortion the region, and providing a signal containing information that enables a decoder to identify the interpolation algorithms corresponding to each of the regions. This information enables a decoder to enhance a base layer video stream while minimizing the amount of information that must be provided to the decoder in order to perform the enhancement.

Therefore, there is a need for preservation of the information required for off-line extraction of biometrical signals during video recording and compression, in particular according to one of the conventional video coding standards.

### SUMMARY OF THE INVENTION

It is an object of the present invention to provide a video encoding device and a corresponding video encoding method for encoding video data, by which PPG relevant information is preserved without requiring a large amount of additional data. It is a further object of the present invention to provide a corresponding video decoding device and method, a video coding system and a computer program for implementing said methods.

In a first aspect of the present invention a video encoding device is presented as claimed in claim 1.

In a further aspect of the present invention a video coding system is presented as defined in claim 9

In further aspects of the present invention a corresponding video coding method and a computer program comprising program code means for causing a computer to carry out the steps of the proposed method when said computer program is carried out on the computer are presented.

Preferred embodiments of the invention are defined in the dependent claims. It shall be understood that the claimed video coding system, method and computer program have similar and/or identical preferred embodiments as the claimed video coding device and as defined in the dependent claims.

The present invention seeks to preserve PPG visual information during a video compression, e.g. by a standard video coder, while allowing compression at a low bit rate. Preferably, the invention allows the generation of a standard compliant coded bit stream. It is particularly proposed to compress a video stream with at least two layers, where one of the layers (hereinafter also called enhancement layer which corresponds to the output of the second encoding unit in the proposed video encoding device) will contain additional information enabling the extraction of PPG signals from the decoded video, while other layer(s) (hereinafter also called base layer(s) which correspond(s) to the output of the first encoding unit in the proposed video encoding device) will contain the video encoded / compressed, e.g. in a regular fashion, i.e. optimal from a perception point of view.

The base layer(s) thus comprises first coded video data having a lower quality than input video data. Generally, said lower quality is a lower visual quality, but the first encoding, e.g. including a data compression, does not necessarily lead to a visual degradation. It could also happen that the PPG relevant information is destroyed or impaired without a loss of visual quality by the first encoding, i.e. a viewer does not necessarily see any visual difference between the input video data and the first coded video data, although PPG relevant information has been lost due to the encoding.

The proposed invention is based on the idea to detect PPG essential visual information, in particular based on an analysis of an original video sequence, to perform regular encoding and decoding of the video sequence in a base layer, and to generate an enhancement layer containing (possibly compressed) additional information to enable a more accurate representation of the visual information relevant for PPG extraction based on the aforementioned detection. Particularly an area that provides the strongest PPG signal, i.e. from which a PPG signal can be well extracted, is selected for encoding into said enhancement layer. Finally, the base layer and the enhancement layer(s), i.e. the first coded video data and the second video data, may be combined in a single encoded video stream for storage on a data carrier or transmission over a transmission line, e.g. the internet or through a mobile communications system.

In this context the expression "PPG-relevant information" is to be understood as information that is relevant for obtaining a PGG signal. Such PPG-relevant information may include information contained in original video data that is not recognized for the human eye, for instance slight color changes of the skin of a person. The expression "PPG signal" in this context generally means any signal that can be obtained through PhotoPlethysmoGraphy analysis , such as temporal biometrical signals, e.g. the heartbeat, cardiac cycle, respiratory rate, SpO2, depth of anesthesia or hypo- and hypervolemia.

In a preferred embodiment, the proposed video encoding device further comprises an analysis unit for analyzing said input video data and determining a region of interest providing the strongest PPG signal, and providing a ROI information about the location of said region of interest to said selection unit for selecting said region of interest in said difference video data. Generally, the selection unit is adapted for selection of a desired region of interest or for getting an information, e.g. through a user interface or from any earlier selection, which region to use as region of interest. In a preferred embodiment a separate analysis unit is provided. Such an analysis unit may, for instance, comprise a face and/or a skin detector for detecting face and/or skin regions in the video data, in particular in one or more image frames. Preferably, the most stable face and/or skin region is selected as region of interest, and the selection unit is provided with an information about the location of said region of interest, hereinafter called ROI information. Such a detector is, for instance, described in Paul Viola, Michael Jones, "Robust Real-time Object Detection", 2nd Intern. Workshop on Statistical and Computational Theories of Vision, Vancouver, Canada, 2001.

Preferably, in an embodiment the encoding unit is adapted for encoding not only the selected region of interest in said difference video data, but also additional regions for the complete difference video data. This provides that during decoding in a video decoding device not only the PPG signal and the original video data (with low visual quality according to the used first encoding scheme) can be obtained, but also video data with improved visual quality can be obtained from said encoded additional regions or the encoded complete difference video data.

For instance, in an embodiment, it may be desired that a particular region of an image is not only provided with low quality after decoding but with higher quality, such as a face of a person. This region may then be selected as additional region that is separately encoded in the video encoding device into the second coded video data so that in the video decoding device said additional region can be decoded with a higher image quality than the first coded video data.

According to another embodiment the subtraction unit is adapted for forming said difference video data by determining the pixel-based difference between a video frame of said intermediate video data and a corresponding video frame of said input video data. Thus, while generally also block-based differences, i.e. differences between groups of pixels, could be used for forming the difference video data, a pixel-based difference provides the highest accuracy. Preferably, this is done frame by frame, which also holds for other steps of the proposed method and device.

Advantageously, the selection unit is adapted for selecting at least the chrominance components, in particular only the chrominance components, of said region of said interest in said difference video data and the encoding unit is adapted for encoding at least said chrominance components, in particular only said chrominance components, of the selected region of interest in said difference video data. This contributes to a reduction of the amount of data contained in the second coded video data which is one of the objects to be achieved according to the present invention. Generally, however, not only chrominance components but also luminance components may be selected and encoded requiring, however, more storage space for the second coded video data. If, however, the purpose of providing the second coded video data is only to enable the video decoding device to retrieve a PPG signal such luminance components are generally not required.

In another embodiment the encoding unit is adapted for encoding only DC components of inter- or intra-blocks of at least the chrominance components, in particular only the chrominance components, of said selected region of interest in said video data. This further contributes to a reduction of the amount of a second coded video data. The PPG relevant information is generally carried by all pixels, but there is generally not much interest in the spatial information. Instead, only as many pixels are needed to take an average in order to improve the signal-to-noise-ratio of the desired PPG signal, e.g. heartbeat, in the individual pixels. The PPG relevant information / the PPG signal is usually smaller even than the quantization steps of an uncompressed 8 bit video signal. This average can be based on the DC component, and there is no absolute need to know the individual pixel values, although it could help in blocks that contain skin and some other image parts (e.g. at the boundary of a face).

In another embodiment the encoding unit is adapted for encoding in or adding to the second coded video data an ROI information about the location of the selected region of interest in the input video data. While it is generally possible that the video decoding device can find a location of the selected region of interest through image analysis, in a preferred embodiment a corresponding ROI information is additionally encoded which can be read and used by the video decoding device.

Still further, in an embodiment the selection unit is adapted for selecting two or more regions of interest in such difference video data providing the strongest PPG signals, and the encoding unit is adapted for encoding the selected regions of interest of said difference video data and outputting them as said second coded video data. Thus, not only a single region of interest but several regions of interest are available for evaluation and retrieval of PPG signals during decoding which increases the reliability. For instance, in an embodiment PPG signals may be retrieved from each of said regions of interest and thereafter in evaluation which of the PPG signal as the highest reliability or an averaging of all PPG signals may be carried out.

During decoding, the video decoding devices are at least able for extract a PPG signal from the combination of first and second coded video data. The PPG extraction uses, for this purpose, generally known methods as, for instance, described in the above-mentioned paper about PPG imaging or as described in other citations describing the basics of PPG. In a preferred embodiment of the video decoding device, however, also enhanced (higher quality) video data of additional regions or of the complete input video data may be retrieved in case corresponding data are included in the second coded video data as explained above.

### BRIEF DESCRIPTION OF THE DRAWINGS

These and other aspects of the invention will be apparent from and elucidated with reference to the embodiment(s) described hereinafter. In the following drawings
Fig. 1 shows a schematic block diagram of a first embodiment of a video encoding device according to the present invention,
Fig. 2 shows a schematic block diagram of a first embodiment of a video decoding device according to the present invention,
Fig. 3 shows a schematic block diagram of a second embodiment of a video encoding device according to the present invention,
Fig. 4 shows a schematic block diagram of a second embodiment of a video decoding device according to the present invention, and
Fig. 5 shows a schematic block diagram of a third embodiment of a video encoding device according to the present invention.

### DETAILED DESCRIPTION OF THE INVENTION

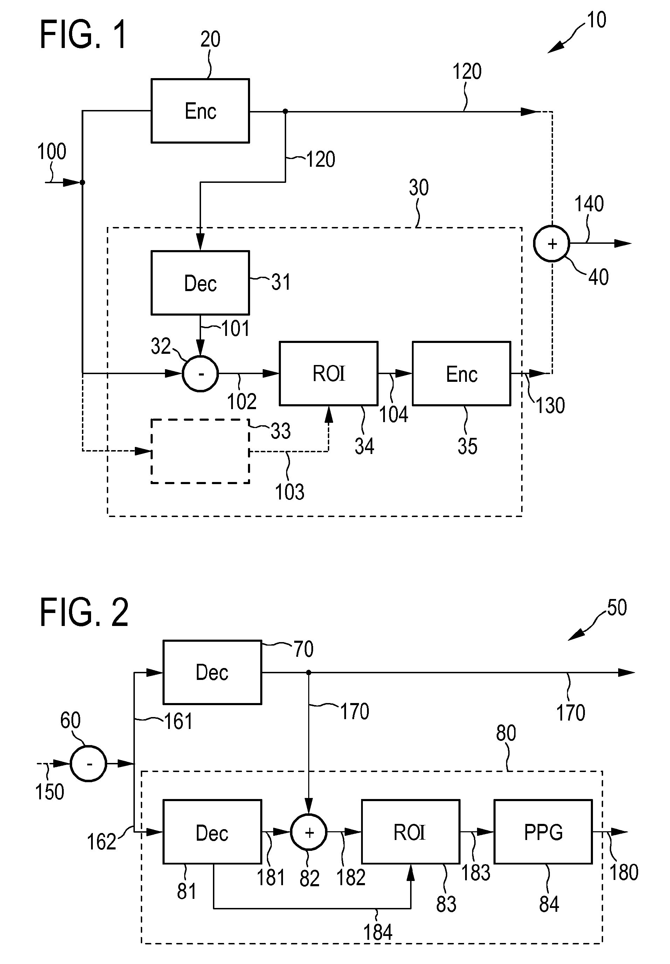

Fig. 1 shows a schematic block diagram of a first embodiment of a video encoding device 10 according to the present invention. According to this embodiment an original video stream 100, also called input video data, is compressed by a first (e.g. standard) encoder 20 at a low bit rate (or at least a bit rate which may be optimal for perception but not sufficient for PPG-extraction), thus forming a base layer video stream 120, also called first coded video data herein. This base layer video stream 120 generally contains video data with a quality at which PPG related information is destroyed. Encoding and transmission of PPG related information is done by means of enhancement layer, which contains the PPG related information, which is removed or corrupted in the base layer video stream 120.

Generally, the PPG signal can be extracted only from skin areas. Moreover, the quality of PPG signals depends on the certain properties of these skin areas, for instance temporal stability, level of illumination and size. Therefore, not the entire skin area will equally contribute to the PPG signal.

In a second encoder 30, applying a second encoding scheme provided for preserving PPG relevant information after encoding, the base layer video stream 120 is first decoded in a decoding unit 31, preferably according to a decoding scheme complementary to the first encoding scheme used for encoding by the first encoder 20, and an intermediate video stream (intermediate video data) 101 is output from the decoding unit 31.

In a subtraction unit 32 a difference video stream 102 (difference video data) is formed by determining the difference between said intermediate video stream 101 and said input video stream 100.

In general, differences between the original video stream 100 and decoded base layer frames 101 in both luminance and chrominance components can be encoded in an enhancement layer video stream 130. However, in case the enhancement layer video stream 130 is required only to extract a PPG signal after decoding, then at least (preferably only) chrominance components can be encoded in the enhancement layer video stream 130. Preferably, the enhancement layer video stream 130 is generated as a pixel-based difference between the decoded base layer video stream 101 and original video frames 100.

In an optional analysis unit 33 the original video stream 100 is processed. In particular, the skin areas of a person's skin in one or more image frames is analyzed and a region of interest (ROI) is defined, which provides a strong PPG signal. This analysis unit 33 may, for instance, comprise a conventional face and/or skin detector which searches for the most stable face and/or skin region since such stable regions are generally supposed to provide the strongest PPG signals. The unit 33 can select a smallest ROI, which would be able to provide a PPG signal. The expected strength of a PPG signal can be analyzed either by analyzing a spatial pixel uniformity inside ROI or by detecting a preferred face areas (e.g. forehead, cheeks). The output of analysis unit 33 is an information about the location of the region of interest, e.g. in the form of a ROI information, which is provided to a selection unit 34 for selecting the region of interest in the intermediate video data 102. The selected region of interest of said difference video data 102 is then encoded in an encoding unit 35. Finally, the encoded region of interest is then outputted as second coded video data 130.

The selection unit 34 preferably selects, e.g. based on the provided ROI information 103, as selection signal 104 at least (preferably only) chrominance components of pixels, which would provide the strongest PPG signal. Alternatively, the selection unit 34 may itself analyze the intermediate video data 102 and select an appropriate region of interest, e.g. by use of image analysis means. Still further, in an embodiment not only a single region of interest, but several regions are selected for PPG extraction, in particular for improving the ability to select the best PPG signal or for averaging PPG signals obtained from different regions.

The selected region of interest is generally smaller than the corresponding skin area and contains the minimum number of pixels required for extraction of PPG signals. An encoder, e.g. a standard encoder, encodes the selection signal, i.e. in this embodiment the chrominance components 104 of the selected ROI into the enhancement layer video stream 130. Due to the fact, that the enhancement layer video stream 130 contains a relatively small number of pixels and preferably only chrominance components, this layer can be encoded at a relatively high bit rate, i.e. near lossless, and yet contributes little to the overall bit rate, i.e. require only a small amount of bit rate or storage space compared to the base layer video stream 120.

In general, differences between original and decoded base layer video frames in both luminance and chrominance components can be encoded in the enhancement layer video stream 130. However, in case the enhancement layer video stream 130 is required only to extract the PPG signal after decoding, then at least (preferably only) the chrominance components need to be encoded in the enhancement layer video stream 130. Preferably, the enhancement layer video stream 130 is generated as a pixel-based difference between the decoded base layer and original video frames.

Generally, the base layer video stream 120 and the enhancement layer video stream 130 may be transmitted (e.g. via the internet, a communications network or a broadcast system) and/or stored (e.g. on a record carrier) separately. However, in an embodiment the base layer video stream 120 and the enhancement layer video stream 130 are combined by a combination unit 40 into an encoder output video stream 140 which is stored and/or transmitted. For such a combination multiple options exist and any one of a plurality of known methods for combining two video streams or, more generally, two data streams may be used.

Generally, the base and enhancement layer video streams 120, 130 are encoded using standard encoders, therefore any corresponding standard decoder can decode each of the video streams (bit streams). However, only a video decoding device, which is built according to the proposed scheme, i.e. which is complementary to the scalable video encoding device 10 shown in Fig. 1, can generally be used for decoding and retrieving a PPG signal there from.

A first embodiment of a schematic block diagram of a video decoding device 50 is shown in Fig. 2. By this video decoding device a PPG signal can be reconstructed from the compressed video streams (or the combined video stream).

In particular, if at the input the decoder input video stream 150 is the combined video stream which - apart from disturbances introduced during storage and/or transmission - should correspond to the encoder output video stream 140, in a separation unit 60 the base layer video stream 161 and the enhancement layer video stream 162 are retrieved, which should - correspond to the base layer video stream 120 and the enhancement layer video stream 130.

In a first decoder 70 the base layer video stream 161 (also called first coded video data) is decoded, in particular according to a first decoding scheme that is complementary to the first encoding scheme used by the first encoder 20. The output is the first decoded video data 170 which should correspond to the video data 101.

In a second decoder 80 the enhancement layer video stream 162 (also called second coded video data) is encoded according to a second encoding scheme. The output of the second decoder 80 is a PPG signal 180 providing biometrical information of a person shown in the video data. Thus, in this embodiment the enhancement layer video stream 130 and 162, respectively, is used only to transport video information required to extract PPG signals.

In particular, in a decoder unit 81 preferably only the chrominance components of the ROI are decoded and outputted as second decoded video data 181 thus improving the quality of the video data showing the region of interest. In an addition unit 82 summation video data 182 is formed by adding said second decoded video data 181 to said decoded base layer video stream 170.

A selection unit 83 defines the area(s) (= region(s) of interest) 183, which is (are) improved by the enhancement layer video data 181, and which will be used for the extraction of PPG signal(s). To define such a region of interest, the coordinates of the compressed chrominance blocks are preferably obtained from the first decoder, which has extracted corresponding ROI information 184, e.g. by reading a ROI information included in the enhancement layer video stream 162 or by image analysis.

In a PPG extraction unit 84 a PPG signal extraction algorithm is applied to spatial region(s) of interest 183 selected by the selection unit 83 to obtain one or more PPG signal(s) 180.

The PPG extraction algorithm can be either real-time or non real-time with manual tuning of parameters. Moreover, the present invention generally allows selection of any particular method of biometrical signal extraction after the video data have been recorded, depending on the particular application. Thus, the same video can be used for extraction of different biometrical signals (e.g. heart rate, heart rate variability, Sp02, respiration, PPG imaging).

Thus, the present invention modifies the known concept of SNR or quality scalability during video compression for the purpose of enabling vital signs extraction. In the proposed concept a base layer encoder compresses a video stream at (generally) relatively low visual quality with a loss of PPG essential information, while an enhancement layer encoder compresses one or more regions of interest of the residual video data (obtained as a difference between the original video and decoded base layer) without loss of PPG essential information, rather than with additional resolution as is known from prior art.

The present invention can be used for video streaming a well as for storage of compressed video material. Normally, only a base layer bit stream will be transferred or decompressed to obtain a video data at a basic quality. The enhancement layer with PPG essential information will be transferred or decompressed only if biometrical signals should be extracted from skin areas. In this way, the optimal trade-off between a compression efficiency and preservation of biometrical information in the compressed video can be achieved.

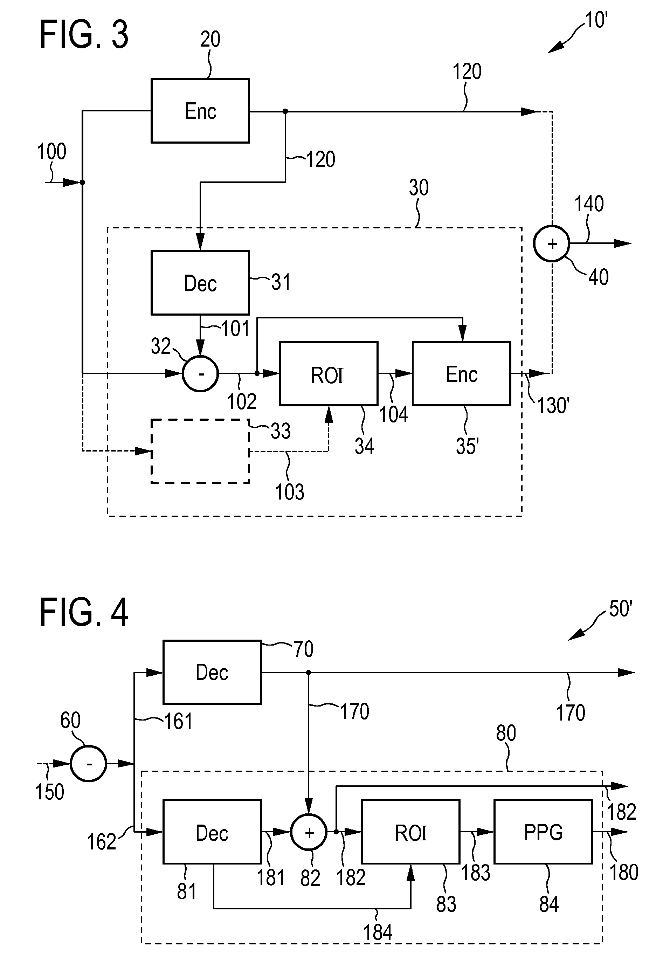

Another embodiment of a video encoding device 10' and a video decoding device 50' according to the present invention are shown in Figs. 3 and 4.

In the embodiment of the video encoding device 10' the encoding unit 35' is adapted to include not only chrominance components required for PPG signal extraction into the enhancement layer video stream 130', but also enhancement information for more (or all) pixels of the video (or of one or more video frames). In this case, the combination 182 of decoded base layer video stream 170 and decoded enhancement layer video stream 181 will provides an enhanced video sequence with improved visual quality, which may be separately issued and used as decoded video data with higher image quality than the decoded base layer video stream 170.

Further, in the embodiment of the video decoding device 50' the selection unit 83' may be applied to frames of the enhanced video stream 182 and can select proper areas for PPG signal extraction either independently, or based on a bit-budget information from decoders of base and enhancement layers. In the second case, skin blocks with higher bit-budget (i.e. more bits) spent on chrominance components, and/or intra-block encoded will be selected to be optimal for PPG signal extraction.

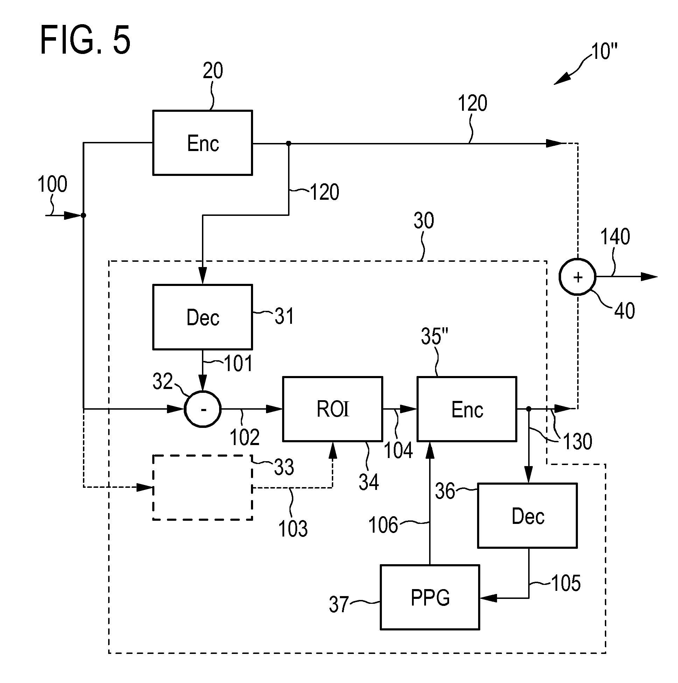

Still another embodiment of a video encoding device 10" according to the present invention is schematically depicted in Fig. 5. This embodiment is quite similar to the embodiment of the video encoding device 10 shown in Fig. 1, but in addition a decoding unit 36 and a PPG signal extraction unit 37 are provided in a feedback loop formed with the encoding unit 35". This feedback loop controls the number of bits allocated to the selected region of interest 104, i.e. controls the setting of the encoding used for encoding said selected region of interest 104 to make sure that the PPG-relevant information is preserved in the encoded region of interest 130.

Thus, the decoding unit 36 decodes the encoded region of interest 104 (applying a decoding scheme that is complementary to the first encoding scheme applied by the first encoding unit 30") and the PPG signal extraction unit 37 extracts a PPG signal 106 from the decoded region of interest 105. The first encoding unit 30" can then decide if the PPG signal has sufficient quality or if the setting used for encoding needs to be changed (e.g. if more bits need to be assigned for the encoded region of interest, and/or if the compression rate needs to be lowered) to increase the quality of the extracted PPG signal. Thus, it can be ensured that in a decoding device a PPG signal can be extracted with sufficient quality.

In summary, the proposed invention allows extraction of the PPG signal after video (de-)compression. The type, complexity and accuracy of PPG extraction algorithms as well as a type of PPG signal (e.g. heart rate, heart rate variability, SpO2) can be selected based on the concrete application. For instance, some applications may require extraction of only heart rate information, while others may require beat-to-beat precise heartbeat signal, or/and respiration, or/and SpO2 (oxygenation). Moreover, the present invention allows an off-line (non-real-time) extraction of PPG signals from a compressed video, with the possibility to manually select and tune optimal parameters.

Generally, the invention is not restricted to particular encoding / decoding schemes. Generally, the first encoding scheme is more lossy than the second encoding scheme. The encoding performed by the encoding unit of the second encoder may, for instance, use an intra-block and/or inter-block coding technique. For instance, in an embodiment at least DC components of intra- or inter-blocks of chrominance channels associated with selected image areas (regions of interest) of the enhancement layer are encoded lossless.

Further, in an embodiment an in-loop de-blocking filter is switched off for at least the chrominance components of the selected image areas (and possibly their neighboring blocks). Some of standard video coding algorithms apply a processing to video being encoded in order to reduce the level of noise, coding artifacts (by means of de-blocking filter) or to optimize a trade-off of a quality versus bit rate by spatially downscaling video. In an embodiment of the invention, such processing is not applied to at least chrominance components of the selected image areas in the second encoding scheme.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored / distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Video encoding device (10, 10') for encoding video data comprising:
i) a first encoder (20) for encoding input video data (100) according to a first encoding scheme and outputting first coded video data (120), wherein PPG relevant information is lost during encoding and the first coded video data (120) have a lower quality than the input video data with respect to the extraction of a PPG signal,
ii) a second encoder (30) for encoding input video data (100) according to a second encoding scheme preserving PPG-relevant information and outputting second coded video data (130), said second encoder comprising:
- a decoding unit (31) for decoding said first coded video data (120), in particular according to a decoding scheme complementary to said first encoding scheme, and outputting intermediate video data (101),
- a subtraction unit (32) for forming difference video data (102) by determining the difference between said intermediate video data and said input video data,
- a selection unit (34) for selecting in said difference video data (102) a skin area as region of interest providing the strongest PPG signal, said selecting being performed by use of obtained ROI information (103) corresponding to the location of said region of interest or based on an image analysis of the intermediate video data (101) in the selection unit (34), and
- an encoding unit (35, 35') for encoding said selected region of interest of said difference video data (102) and outputting it as said second coded video data (130), wherein said encoding unit (35, 35') is adapted for encoding only chrominance components (101a) of said selected region of interest in said difference video data or for encoding only DC components of inter- or intra-blocks of the chrominance components (101a) of said selected region of interest in said difference video data (102).

2. Video encoding device (10, 10') as claimed in claim 1,
further comprising an analysis unit (33) for analyzing said input video data (100) and determining a region of interest providing the strongest PPG signal and providing said ROI information (103) about the location of said region of interest to said selection unit for selecting said region of interest in said difference video data.

3. Video encoding device (10, 10') as claimed in claim 1,
wherein said encoding unit (35') is adapted for encoding not only the selected region of interest in said difference video data (102), but also additional regions or the complete difference video data (102).

4. Video encoding device (10, 10') as claimed in claim 1,
wherein said subtraction unit (32) is adapted for forming said difference video data (102) by determining the pixel-based difference between a video frame of said intermediate video data and the corresponding video frame of said input video data.

5. Video encoding device (10, 10') as claimed in claim 1,
wherein said selection unit (34) is adapted for selecting at least the chrominance components (101a), in particular only the chrominance components (101a), of said region of interest in said difference video data (102) and
wherein said encoding unit (35, 35') is adapted for encoding only said chrominance components (101a), of said selected region of interest in said difference video data.

6. Video encoding device (10, 10') as claimed in claim 1,
wherein said encoding unit (35, 35') is adapted for encoding in or adding to the second coded video data a ROI information (103) about the location of the selected region of interest in the input video data (100).

7. Video encoding device (10, 10') as claimed in claim 1,
wherein said selection unit (34) is adapted for selecting two or more regions of interest in said difference video data (102) providing the strongest PPG signals, and
wherein said encoding unit (35, 35') is adapted for encoding said selected regions of interest of said difference video data and outputting them as said second coded video data (130).

8. Video encoding method for encoding video data comprising the steps of:
- encoding input video data (100) according to a first encoding scheme and outputting first coded video data (120), wherein PPG relevant information is lost during encoding and the first coded video data (120) having a lower quality than the input video data with respect to the extraction of a PPG signal,
- decoding said first coded video data (120), in particular according to a decoding scheme complementary to said first encoding scheme, and outputting intermediate video data (101),
- forming difference video data (102) by determining the difference between said intermediate video data and said input video data,
- selecting in said difference video data (102) a skin area as region of interest providing the strongest PPG signal, said selecting being performed by use of obtained ROI information (103) corresponding to the location of said region of interest or based on an image analysis of the intermediate video data (101), and
- encoding said selected region of interest of said difference video data (102) and outputting it as second coded video data (130) preserving PPG-relevant information, wherein only chrominance components (101a) of said selected region of interest in said difference video data are encoded or only DC components of inter- or intra-blocks of the chrominance components (101a) of said selected region of interest in said difference video data (102) are encoded.

9. Video coding system for encoding and decoding video data, comprising:
a video encoding device (10, 10') as claimed in claim 1 for encoding input video data, and avideo decoding device (50, 50') for decoding encoded video data, said encoded video data (150) comprising first coded video data (161) encoded according to a first encoding scheme, wherein PPG relevant information is lost during encoding and the first coded video data (161) have a lower quality than input video data with respect to the extraction of a PPG signal and comprising second coded video data (162) encoded according to a second encoding scheme preserving PPG-relevant information, said video decoding device comprising:
i) a first decoder (70) for decoding said first coded video data (161) according to a first decoding scheme and outputting first decoded video data (170),
ii) a second decoder (80) for decoding said second coded video data (162) according to a second encoding scheme and outputting a PPG signal (180), said second decoding unit comprising:
- a decoding unit (81) for decoding said second coded video data (162), in particular according to a decoding scheme complementary to an encoding scheme used in the second encoding scheme used for encoding said input video data, for retrieving ROI information (184) corresponding to the location of a selected region of interest in the first coded video data (161), and outputting second decoded video data and said ROI information,
- an addition unit (82) for forming a summation video data (182) by adding said second decoded video data (181) to said first decoded video data (170),
- a selection unit (83) for selecting in said summation video data (182) a skin area as region of interest by use of said ROI information (184), said region of interest providing the strongest PPG signal, and
- a PPG extraction unit (84) for extracting of said PPG signal (180) from said selected region of interest in said summation video data (182).

10. Video coding system as claimed in claim 9,
wherein said decoding unit (81) is adapted for decoding at least chrominance components, in particular only chrominance components, of said second coded video data (162).

11. Video coding system as claimed in claim 9,
wherein said decoding unit (81) is adapted for decoding second coded video data (162) comprising not only coded video data of a selected region of interest but also coded video data of additional regions or the complete input video data.

12. Computer program comprising program code means for causing a computer to carry out the steps of the method as claimed in claim 8 when said computer program is carried out on the computer.

## Patentansprüche

1. Videocodiereinrichtung (10, 10') zur Codierung von Videodaten, umfassend:
i) einen ersten Codierer (20) zur Codierung von Videoeingangsdaten (100) gemäß einem ersten Codierschema sowie zur Ausgabe von ersten codierten Videodaten (120), wobei PPG-relevante Informationen während der Codierung verlorengehen und die ersten codierten Videodaten (120) eine geringere Qualität als die Videoeingangsdaten im Hinblick auf die Extraktion eines PPG-Signals aufweisen,
ii) einen zweiten Codierer (30) zur Codierung von Videoeingangsdaten (100) gemäß einem PPG-relevante Informationen erhaltenden zweiten Codierschema sowie zur Ausgabe von zweiten codierten Videodaten (130), wobei der zweite Codierer umfasst:
- eine Decodiereinheit (31) zur Decodierung der ersten codierten Videodaten (120), vorzugsweise gemäß einem zu dem ersten Codierschema komplementären Decodierschema, sowie zur Ausgabe von Videozwischendaten (101),
- eine Subtraktionseinheit (32) zur Erzeugung von Videodifferenzdaten (102) durch Ermitteln der Differenz zwischen den Videozwischendaten und den Videoeingangsdaten,
- eine Auswahleinheit (34), um in den Videodifferenzdaten (102) einen das stärkste PPG-Signal vorsehenden Hautbereich als interessierenden Bereich auszuwählen, wobei das Auswählen unter Anwendung empfangener ROI-Informationen (103) entsprechend der Positionierung des interessierenden Bereichs oder aufgrund einer Bildanalyse der Videozwischendaten (101) in der Auswahleinheit (34) durchgeführt wird, sowie
- eine Codiereinheit (35, 35') zur Codierung des ausgewählten interessierenden Bereichs der Videodifferenzdaten (102) sowie zur Ausgabe desselben als die zweiten codierten Videodaten (130), wobei die Codiereinheit (35, 35') so eingerichtet ist, dass sie ausschließlich Chrominanzkomponenten (101a) des ausgewählten interessierenden Bereichs in den Videodifferenzdaten codiert oder ausschließlich DC-Komponenten von Inter- oder Intrablöcken der Chrominanzkomponenten (101a) des ausgewählten interessierenden Bereichs in den Videodifferenzdaten (102) codiert.

2. Videocodiereinrichtung (10, 10') nach Anspruch 1,
die weiterhin eine Analyseeinheit (33) umfasst, um die Videoeingangsdaten (100) zu analysieren und einen das stärkste PPG-Signal vorsehenden interessierenden Bereich zu ermitteln und der Auswahleinheit die ROI-Informationen (103) über die Positionierung des interessierenden Bereichs zuzuführen, um den interessierenden Bereich in den Videodifferenzdaten auszuwählen.

3. Videocodiereinrichtung (10, 10') nach Anspruch 1,
wobei die Codiereinheit (35') so eingerichtet ist, dass sie nicht nur den ausgewählten interessierenden Bereich in den Videodifferenzdaten (102), sondern ebenfalls zusätzliche Bereiche oder die kompletten Videodifferenzdaten (102).codiert.

4. Videocodiereinrichtung (10, 10') nach Anspruch 1,
wobei die Subtraktionseinheit (32) so eingerichtet ist, dass sie die Videodifferenzdaten (102) durch Ermitteln der pixelbasierten Differenz zwischen einem Videoframe der Videozwischendaten und dem entsprechenden Video frame der Videoeingangsdaten erzeugt.

5. Videocodiereinrichtung (10, 10') nach Anspruch 1,
wobei die Auswahleinheit (34) so eingerichtet ist, dass sie zumindest die Chrominanzkomponenten (101a), vorzugsweise nur die Chrominanzkomponenten (101a) des interessierenden Bereichs in den Videodifferenzdaten (102), auswählt, und
wobei die Codiereinheit (35, 35') so eingerichtet ist, dass sie nur die Chrominanzkomponenten (101a) des ausgewählten interessierenden Bereichs in den Videodifferenzdaten codiert.

6. Videocodiereinrichtung (10, 10') nach Anspruch 1,
wobei die Codiereinheit (35, 35') so eingerichtet ist, dass sie in den zweiten codierten Videodaten ROI-Informationen (103) über die Positionierung des ausgewählten interessierenden Bereichs in den Videoeingangsdaten (100) codiert oder zu diesen hinzufügt.

7. Videocodiereinrichtung (10, 10') nach Anspruch 1,
wobei die Auswahleinheit (34) so eingerichtet ist, dass sie zwei oder mehr, die stärksten PPG-Signale vorsehende interessierende Bereiche in den Videodifferenzdaten (102) auswählt, und
wobei die Codiereinheit (35, 35') so eingerichtet ist, dass sie die ausgewählten interessierenden Bereiche der Videodifferenzdaten codiert und diese als die zweiten codierten Videodaten (130) ausgibt.

8. Videocodierverfahren zur Codierung von Videodaten, welches die folgenden Schritte umfasst, wonach:
- Videoeingangsdaten (100) gemäß einem ersten Codierschema codiert und erste codierte Videodaten (120) ausgegeben werden, wobei PPG-relevante Informationen während der Codierung verlorengehen und die ersten codierten Videodaten (120) eine geringere Qualität als die Videoeingangsdaten im Hinblick auf die Extraktion eines PPG-Signals aufweisen,
- die ersten codierten Videodaten (120), vorzugsweise gemäß einem zu dem ersten Codierschema komplementären Decodierschema, decodiert und Videozwischendaten (101) ausgegeben werden,
- Videodifferenzdaten (102) durch Ermitteln der Differenz zwischen den Videozwischendaten und den Videoeingangsdaten erzeugt werden,
- in den Videodifferenzdaten (102) ein das stärkste PPG-Signal vorsehender Hautbereich als interessierenden Bereich ausgewählt wird, wobei das Auswählen unter Anwendung empfangener ROI-Informationen (103) entsprechend der Positionierung des interessierenden Bereichs oder aufgrund einer Bildanalyse der Videozwischendaten (101) in der Auswahleinheit (34) durchgeführt wird, und
- der ausgewählte interessierende Bereichs der Videodifferenzdaten (102) codiert und dieser als PPG-relevante Informationen erhaltende, zweite codierte Videodaten (130) ausgegeben wird, wobei ausschließlich Chrominanzkomponenten (101a) des ausgewählten interessierenden Bereichs in den Videodifferenzdaten codiert werden oder ausschließlich DC-Komponenten von Inter- oder Intrablöcken der Chrominanzkomponenten (101a) des ausgewählten interessierenden Bereichs in den Videodifferenzdaten (102) codiert werden.

9. Videocodiersystem zur Codierung und Decodierung von Videodaten, umfassend:
eine Videocodiereinrichtung (10, 10') nach Anspruch 1 zur Codierung von Videoeingangsdaten sowie eine Videodecodiereinrichtung (50, 50') zur Decodierung codierter Videodaten, wobei die codierten Videodaten (150) erste, gemäß einem ersten Codierschema codierte Videodaten (161) umfassen, wobei PPG-relevante Informationen während der Codierung verlorengehen und die ersten codierten Videodaten (161) eine geringere Qualität als die Videoeingangsdaten im Hinblick auf die Extraktion eines PPG-Signals aufweisen, und zweite, gemäß einem PPG-relevante Informationen erhaltenden, zweiten Codierschema codierte Videodaten (162) umfassen, wobei die Videodecodiereinrichtung umfasst:
i) einen ersten Decoder (70) zur Decodierung der ersten codierten Videodaten (161) gemäß einem ersten Decodierschema sowie zur Ausgabe von ersten decodierten Videodaten (170),
ii) einen zweiten Decoder (80) zur Decodierung der gemäß einem zweiten Codierschema codierten zweiten codierten Videodaten (162) sowie zur Ausgabe eines PPG-Signals (180), wobei der zweite Decoder umfasst:
- eine Decodiereinheit (81) zur Decodierung der zweiten codierten Videodaten (162), vorzugsweise gemäß einem Decodierschema, das zu einem in dem zweiten Codierschema verwendeten Codierschema zur Codierung der Videoeingangsdaten komplementär ist, zum Abrufen von ROI-Informationen (184) entsprechend der Positionierung eines ausgewählten interessierenden Bereichs in den ersten codierten Videodaten (161) sowie zur Ausgabe von zweiten decodierten Videodaten und der ROI-Unformationen,
- eine Additionseinheit (82) zur Erzeugung von Videosummierungsdaten (182) durch Hinzufügen der zweiten decodierten Videodaten (181) zu den ersten decodierten Videodaten (170),
- eine Auswahleinheit (83), um in den Videosummierungsdaten (182) einen Hautbereich als interessierenden Bereich unter Verwendung der ROI-Informationen (184) auszuwählen, wobei der interessierende Bereich das stärkste PPG-Signal vorsieht, sowie
- eine PPG-Extraktionseinheit (84), um das PPG-Signal (180) aus dem ausgewählten interessierenden Bereich in den Videosummierungsdaten (182) zu extrahieren.

10. Videocodiersystem nach Anspruch 9,
wobei die Decodiereinheit (81) so eingerichtet ist, dass sie zumindest Chrominanzkomponenten, vorzugsweise nur Chrominanzkomponenten, der zweiten codierten Videodaten (162) decodiert.

11. Videocodiersystem nach Anspruch 9,
wobei die Decodiereinheit (81) so eingerichtet ist, dass sie zweite codierte Videodaten (162) mit nicht nur codierten Videodaten eines ausgewählten interessierenden Bereichs, sondern auch codierte Videodaten zusätzlicher Bereiche oder die kompletten Videoeingangsdaten decodiert.

12. Computerprogramm mit Programmcodemitteln, um zu bewirken, dass ein Computer die Schritte des Verfahrens nach Anspruch 8 ausführt, wenn das Computerprogramm auf dem Computer ausgeführt wird.

## Revendications

1. Dispositif d'encodage vidéo (10, 10') pour encoder des données vidéo, comprenant :
i) un premier encodeur (20) pour encoder des données vidéo d'entrée (100) selon un premier schéma d'encodage et sortir des premières données vidéo codées (120), dans lequel des informations pertinentes à la PPG sont perdues durant l'encodage et les premières données vidéo codées (120) possèdent une qualité inférieure à celle des données vidéo d'entrée en ce qui concerne l'extraction d'un signal de PPG,
ii) un second encodeur (30) pour encoder des données vidéo d'entrée (100) selon un second schéma d'encodage préservant des informations pertinentes à la PPG et sortir des secondes données vidéo codées (130), ledit second encodeur comprenant :
- une unité de décodage (31) pour décoder lesdites premières données vidéo codées (120), en particulier selon un schéma de décodage complémentaire audit premier schéma d'encodage, et sortir des données vidéo intermédiaires (101),
- une unité de soustraction (32) pour former des données vidéo de différence (102) en déterminant la différence entre lesdites données vidéo intermédiaires et lesdites données vidéo d'entrée,
- une unité de sélection (34) pour sélectionner, dans lesdites données vidéo de différence (102), une zone cutanée en tant que région d'intérêt fournissant le signal de PPG le plus intense, ladite sélection étant réalisée en utilisant des informations de ROI obtenues (103) correspondant à la localisation de ladite région d'intérêt ou en fonction d'une analyse d'image des données vidéo intermédiaires (101) dans l'unité de sélection (34), et
- une unité d'encodage (35, 35') pour encoder ladite région d'intérêt sélectionnée desdites données vidéo de différence (102) et la sortir en tant que dites secondes données vidéo codées (130), dans lequel ladite unité d'encodage (35, 35') est adaptée pour encoder seulement des composants de chrominance (101a) de ladite région d'intérêt sélectionnée dans lesdites données vidéo de différence ou pour encoder seulement des composants DC d'inter- ou d'intra-blocs des composants de chrominance (101a) de ladite région d'intérêt sélectionnée dans lesdites données vidéo de différence (102).

2. Dispositif d'encodage vidéo (10, 10') selon la revendication 1,
comprenant en outre une unité d'analyse (33) pour analyser lesdites données vidéo d'entrée (100) et déterminer une région d'intérêt fournissant le signal de PPG le plus intense et fournissant lesdites informations de ROI (103) concernant la localisation de ladite région d'intérêt à ladite unité de sélection pour sélectionner ladite région d'intérêt dans lesdites données vidéo de différence.

3. Dispositif d'encodage vidéo (10, 10') selon la revendication 1,
dans lequel ladite unité d'encodage (35') est adaptée pour encoder non seulement la région d'intérêt sélectionnée dans lesdites données vidéo de différence (102), mais également des régions supplémentaires ou les données vidéo de différence complètes (102).

4. Dispositif d'encodage vidéo (10, 10') selon la revendication 1,
dans lequel ladite unité de soustraction (32) est adaptée pour former lesdites données vidéo de différence (102) en déterminant la différence à base de pixel entre une image vidéo desdites données vidéo intermédiaires et l'image vidéo correspondante desdites données vidéo d'entrée.

5. Dispositif d'encodage vidéo (10, 10') selon la revendication 1,
dans lequel ladite unité de sélection (34) est adaptée pour sélectionner au moins les composants de chrominance (101a), en particulier seulement les composants de chrominance (101a), de ladite région d'intérêt dans lesdites données vidéo de différence (102), et
dans lequel ladite unité d'encodage (35, 35') est adaptée pour encoder seulement lesdits composants de chrominance (101a) de ladite région d'intérêt sélectionnée dans lesdites données vidéo de différence.

6. Dispositif d'encodage vidéo (10, 10') selon la revendication 1,
dans lequel ladite unité d'encodage (35, 35') est adaptée pour encoder dans les, ou ajouter aux, secondes données vidéo codées des informations de ROI (103) concernant la localisation de la région d'intérêt sélectionnée dans les données vidéo d'entrée (100).

7. Dispositif d'encodage vidéo (10, 10') selon la revendication 1,
dans lequel ladite unité de sélection (34) est adaptée pour sélectionner deux, ou plus, régions d'intérêt dans lesdites données vidéo de différence (102) fournissant les signaux de PPG les plus intenses, et
dans lequel ladite unité d'encodage (35, 35') est adaptée pour encoder lesdites régions d'intérêt sélectionnées desdites données vidéo de différence et les sortir en tant que dites secondes données vidéo codées (130).

8. Procédé d'encodage vidéo pour encoder des données vidéo, comprenant les étapes de :
- l'encodage de données vidéo d'entrée (100) selon un premier schéma d'encodage et la sortie de premières données vidéo codées (120), dans lequel des informations pertinentes à la PPG sont perdues durant l'encodage et les premières données vidéo codées (120) possèdent une qualité inférieure à celle des données vidéo d'entrée en ce qui concerne l'extraction d'un signal de PPG,
- le décodage desdites premières données vidéo codées (120), en particulier selon un schéma de décodage complémentaire audit premier schéma d'encodage, et la sorte de données vidéo intermédiaires (101),
- la formation de données vidéo de différence (102) en déterminant la différence entre lesdites données vidéo intermédiaires et lesdites données vidéo d'entrée,
- la sélection, dans lesdites données vidéo de différence (102), d'une zone cutanée en tant que région d'intérêt fournissant le signal de PPG le plus intense, ladite sélection étant réalisée en utilisant des informations de ROI obtenues (103) correspondant à la localisation de ladite région d'intérêt ou en fonction d'une analyse d'image des données vidéo intermédiaires (101) dans la unité de sélection (34), et
- l'encodage de ladite région d'intérêt sélectionnée desdites données vidéo de différence (102) et sa sortie en tant que secondes données vidéo codées (130) préservant des informations pertinentes à la PPG, dans lequel seulement des composants de chrominance (101a) de ladite région d'intérêt sélectionnée dans lesdites données vidéo de différence sont encodés ou seulement des composants DC d'inter- ou d'intra-blocs des composants de chrominance (101a) de ladite région d'intérêt sélectionnée dans lesdites données vidéo de différence (102) sont encodés.

9. Système de codage vidéo pour encoder et décoder des données vidéo, comprenant :
un dispositif d'encodage vidéo (10, 10') selon la revendication 1 pour encoder des données vidéo d'entrée, et un dispositif de décodage vidéo (50, 50') pour décoder des données vidéo encodées, lesdites données vidéo encodées (150) comprenant des premières données vidéo codées (161) encodées selon un premier schéma d'encodage, dans lequel des informations pertinentes à la PPG sont perdues durant l'encodage et les premières données vidéo codées (161) possèdent une qualité inférieure à celle de données vidéo d'entrée en ce qui concerne l'extraction d'un signal de PPG et comprenant des secondes données vidéo codées (162) encodées selon un second schéma d'encodage préservant des informations pertinentes à la PPG, ledit dispositif de décodage vidéo comprenant :
i) un premier décodeur (70) pour décoder lesdites premières données vidéo codées (161) selon un premier schéma de décodage et sortir des premières données vidéo décodées (170),
ii) un second décodeur (80) pour décoder lesdites secondes données vidéo codées (162) selon un second schéma d'encodage et sortir un signal de PPG (180), ladite seconde unité de décodage comprenant :
- une unité de décodage (81) pour décoder lesdites secondes données vidéo codées (162), en particulier selon un schéma de décodage complémentaire à un schéma d'encodage utilisé dans le second schéma d'encodage utilisé pour encoder lesdites données vidéo d'entrée, pour récupérer des informations de ROI (184) correspondant à la localisation d'une région d'intérêt sélectionnée dans les premières données vidéo codées (161), et sortir des secondes données vidéo décodées et lesdites informations de ROI,
- une unité d'addition (82) pour former des données vidéo de sommation (182) en additionnant lesdites secondes données vidéo décodées (181) auxdites premières données vidéo décodées (170),
- une unité de sélection (83) pour sélectionner, dans lesdites données vidéo de sommation (182), une zone cutanée en tant que région d'intérêt en utilisant lesdites informations de ROI (184), ladite région d'intérêt fournissant le signal de PPG le plus intense, et
- une unité d'extraction de PPG (84) pour l'extraction dudit signal de PPG (180) à partir de ladite région d'intérêt sélectionnée dans lesdites données vidéo de sommation (182).

10. Système de codage vidéo selon la revendication 9,
dans lequel ladite unité de décodage (81) est adaptée pour décoder au moins des composants de chrominance, en particulier seulement des composants de chrominance, desdites secondes données vidéo codées (162).

11. Système de codage vidéo selon la revendication 9,
dans lequel ladite unité de décodage (81) est adaptée pour décoder des secondes données vidéo codées (162) comprenant non seulement des données vidéo codées d'une région d'intérêt sélectionnée mais également des données vidéo codées de régions supplémentaires ou les données vidéo d'entrée complètes.

12. Programme d'ordinateur comprenant des moyens codes de programme pour faire en sorte qu'un ordinateur réalise les étapes du procédé selon la revendication 8 lorsque ledit programme d'ordinateur est exécuté sur l'ordinateur.
